# EUROPEAN PATENT SPECIFICATION

(11) **EP 2 945 167 B1**
(45) Date of publication and mention of the grant of the patent: **05.09.2018**
(21) Application number: 14305721.4
(22) Date of filing: 16.05.2014
(51) Int. Cl.: H01B 3/44, B29C 47/02, B29C 47/36, H01B 13/00, H01B 13/14

(54) **Method for providing an insulated electric DC cable or DC termination or joint**
Verfahren zur Bereitstellung eines isolierten elektrischen Gleichstromkabels oder eines Gleichstromanschlusses oder einer Gleichstrommuffe
Procédé pour fournir un câble, une terminaison ou une jonction de courant continu électrique isolé

(43) Date of publication of application: 18.11.2015
(73) Proprietor: Nexans, 92400 Courbevoie (FR)
(72) Inventor: Sonerud, Björn, 41135 Göteborg (SE); Nilsson, Susanne, 41135 GÖTEBORG (SE); Huuva, Ramona, 42349 TORSLANDA (SE)
(74) Representative: Gauer, Pierre

(56) References cited:
- US-A1- 2002 039 654
- US-B2- 8 398 803
- ANDREWS T ET AL: "The role of degassing in XLPE power cable manufacture", IEEE ELECTRICAL INSULATION MAGAZINE, IEEE SERVICE CENTER, NEW YORK, NY, US, vol. 22, no. 6, 1 November 2006 (2006-11-01), pages 5-16, XP011442956, ISSN: 0883-7554, DOI: 10.1109/MEI.2006.253416

## Description

The present invention relates generally to electrical power equipment, and particularly to high voltage electrical power equipment. More particularly, the invention relates to a method for providing an insulated electric high voltage DC cable or a high voltage DC termination or joint.

Extruded solid insulation based on a polyethylene, or a cross linked polyethylene (XLPE), has for almost 40 years been used for AC transmission and distribution cable insulation.

Therefore the possibility of the use of XLPE for DC cable insulation has been under investigation for many years. Cables with such insulations have the same advantage as the mass impregnated cable in that for DC transmission there are no restrictions on circuit length and they also have a potential for being operated at higher temperatures, thus offering a possibility to increase the transmission load.

However, it has not been possible to obtain the full potential of these materials for full size cables. It is believed that one of the main reasons being the development and accumulation of space charges in the dielectric when subjected to a DC field. Such space charges distort the stress distribution and persist for long periods because of the high resistivity of the polymers. Space charges in an insulation body do, when subjected to the forces of an electric DC-field, accumulate in a way that a polarized pattern similar to a capacitor is formed.

There are two basic types of space charge accumulation patterns, differing in the polarity of the space charge accumulation. The space charge accumulation results in a local increase at certain points of the actual electric field in relation to the field, which would be contemplated when considering the geometrical dimensions and dielectric characteristics of insulation. The increase noted in the actual field might be 5 or even 10 times the contemplated field.

Thus, the design field for cable insulation must include a safety factor taking account for this considerably higher field resulting in the use of thicker and/or more expensive materials in the cable insulation. The build up of the space charge accumulation is a slow process, and therefore this problem is accentuated when the polarity of the cable after being operated for a long period of time at same polarity is reversed. As a result of the reversal a capacitive field is superimposed on the field resulting from the space charge accumulation and the point of maximal field stress is moved from the interface and into the insulation. Attempts have been made to improve the situation by the use of additives to reduce the insulation resistance without seriously affecting other properties.

An extruded resin composition for AC cable insulation typically comprises a polyethylene resin as the base polymer complemented with various additives such as a peroxide cross linking agent, a scorch retarding agent and an anti-oxidant or a system of antioxidants. In the case of an extruded insulation the semi-conductive shields are also typically extruded and comprise a resin composition that in addition to the base polymer and an electrically conductive or semi-conductive filler comprises essentially the same type of additives. The various extruded layers in an insulated cable in general are often based on a polyethylene resin. Polyethylene resin means generally and in this application a resin based on polyethylene or a copolymer of ethylene, wherein the ethylene monomer constitutes a major part of the mass.

Thus polyethylene resins may be composed of ethylene and one or more monomers which are co-polymerisable with ethylene. Low density polyethylene (LDPE) is today the predominant insulating base material for AC cables. To improve the physical properties of the extruded insulation and its capability to withstand degradation and decomposition under the influence of the conditions prevailing under production, shipment, laying, and use of such a cable the polyethylene based composition typically comprises additives such as stabilizing additives, e.g. antioxidants, electron scavengers to counteract decomposition due to oxidation, radiation etc., lubricating additives, e.g. stearic acid, to increase processability, additives for increased capability to withstand electrical stress, e.g. an increased water tree resistance, e.g. polyethylene glycol, silicones etc., and cross-linking agents such as peroxides, which decompose upon heating into free radicals and initiate cross-linking of the polyethylene resin, sometimes used in combination with unsaturated compounds having the ability to enhance the cross-linking density, scorch retarders to avoid premature cross-linking.

The number of various additives is large and the possible combinations thereof are essentially unlimited. When selecting an additive or a combination or group of additives the aim is that one or more properties shall be improved while others shall be maintained or if possible also improved. However, in reality it is always next to impossible to forecast all possible side effects of a change in the system of additives. In other cases the improvements sought for are of such dignity that some minor negative have to be accepted, although there is always an aim to minimize such negative effects.

Although some disadvantages with the use of an XLPE composition have been known for a long time its advantages (e.g. its ability to prevent scorch, i.e., premature cross linking) have outweighed these drawbacks. Furthermore it is well known that this type of XLPE composition exhibits a strong tendency to form space charges under DC electric fields, thus making it unusable in insulation systems for DC cables. However, it is also known that extended degassing, i.e., exposing the cross linked cable insulation to high temperatures for long periods of time, will result in a decreased tendency to space charge accumulation under DC voltage stress. It is generally believed that the heat treatment removes the peroxide decomposition products, such as acetophenone and cumyl alcohol, from the insulation whereby the space charge accumulation is reduced. Degassing is a time-consuming batch-process comparable with impregnation of paper insulations and thus as costly. Therefore it is advantageous if the need for degassing is removed. Most known cross-linked polyethylene compositions used as extruded insulation in AC-cable exhibit a tendency for space charge accumulation which renders them unsuitable for use in insulation systems for DC cables.

Thus it is desirous to provide a process for production of an insulated DC cable with an extruded polymer based electrical insulation system suitable for use as a transmission and distribution cable in networks and installations for DC transmission and distribution of electric power. The process for application and processing of then extruded insulation system shall preferably be carried out in a manner such that there is no need for any lengthy time consuming batch-treatment. (e.g. heat treatment) of the cable to ensure stable and consistent dielectric properties and a high and consistent electric strength of the cable insulation. The resulting cable insulation shall further exhibit a low tendency to space charge accumulation, a high DC breakdown strength, a high impulse strength and high insulation resistance. The adoption of such a process would offer both technical and economical advances over prior art methods as production time and production costs can be reduced and the possibility for an essentially continuous or at least semi-continuous process for the application and processing of the cable insulation system is provided. Further the process shall ensure that the reliability, the low maintenance requirements and the long working life of a conventional DC-cable, comprising an impregnated paper-based insulation, shall be maintained or improved.

It is an object of the present invention to provide a method for providing an insulated electric (high voltage) DC cable as specified in the foregoing. It is also an object of the invention to provide a (high voltage) DC termination or joint having similar properties.

The object mentioned above is accomplished by a method of providing an insulated electric DC cable or DC termination or joint.

The method according to the invention comprises :
- providing a polymer based insulation system comprising a compounded polymer composition, characterized by the step of:
- exposing the polymer based insulation system to a heat treatment procedure while the outer surface of the polymer based insulation system is covered by a cover permeable to all the substances present in the polymer based insulation system in a non-homogenous distribution, the permeable cover having a melting and/or softening temperature greater than or equal to 120 °C, and preferably greater than or equal to 125 °C, thereby equalizing the concentration of the substances in the polymer based insulation system.

Indeed, the applicant has surprisingly discovered that contrarily to the use of an impermeable cover disclosed in US 8,398,803, a low tendency to space charge accumulation could also be obtained with the use of a specific permeable cover, that slows down permeation and leads to a more even distribution on the volatile by-products through the polymer based insulation system. It has been discovered that the same effect on the final by-product distribution as an impermeable layer can be obtained with the permeable cover.

The permeability of the permeable cover to the substances is preferably lower than the permeability of the polymer based insulation system (typically the compounded polymer composition) to the substances.

The permeable cover can comprise a polymeric material that is chosen from, but not limited to: polyolefins, i.e. homopolymers and copolymers, such as high density polyethylene and polypropylene, polyacetates, polystyrenes, polyacrylates, such as polymethylmethacrylates, halogenated polymers, such as polytetrafluoroethylene and polyvinyl chloride, polycarbonates, polyesters, such as polyethylene terephthalate, polyamides, such as polyamide 6 (nylon), polyoximetylen, polysulfons, and polyaryleterketons.

The compounded polymer composition is preferably a cross-linked polymer composition.

The compounded polymer composition is typically a cross-linked polyethylene.

The substances present in the polymer based insulation system in a non-homogenous distribution include typically at least one rest or byproduct from the cross-linking.

The substances present in the polymer based insulation system in a non-homogenous distribution can include at least one peroxide decomposition product.

The polymer based insulation system can comprise a first semi-conducting shield, the compounded polymer composition, and a second semi-conducting shield.

The permeable cover is preferably removed after the heat treatment procedure.

The method can be a method for production of insulated electric DC cable and :
- the cable can be exposed to a heat treatment while the outer surface of the polymer based insulation system is preferably not covered by the permeable cover to remove a second substance present in the polymer based insulation system after cross-linking; and
- said exposure of the polymer based insulation system to the heat treatment procedure while the outer surface of the extruded polymer based insulation system is covered by the cover is preferably performed after removal of said second substance to thereby equalize the concentration of the substances in the polymer based insulation system.

Said second substance is typically methane.

Said exposure of the polymer based insulation system to the heat treatment procedure while the outer surface of the extruded polymer based insulation system is preferably covered by the cover is performed after removal of said second substance to thereby increase the concentration of the substances adjacent to the outer surface of the polymer based insulation system.

The heat treatment procedure can be performed at a temperature of between 50 and 120 °C, and most preferably between 85 and 105 °C.

Further characteristics of the invention and advantages thereof will be evident from the following detailed description of embodiments of the invention:
- FIG. 1 is a flow scheme of a method for production of an insulated electric high voltage DC cable according to an embodiment of the present invention, and
- FIG. 2 illustrates schematically in a perspective view a high voltage DC cable as manufactured according to the flow scheme of FIG. 1.

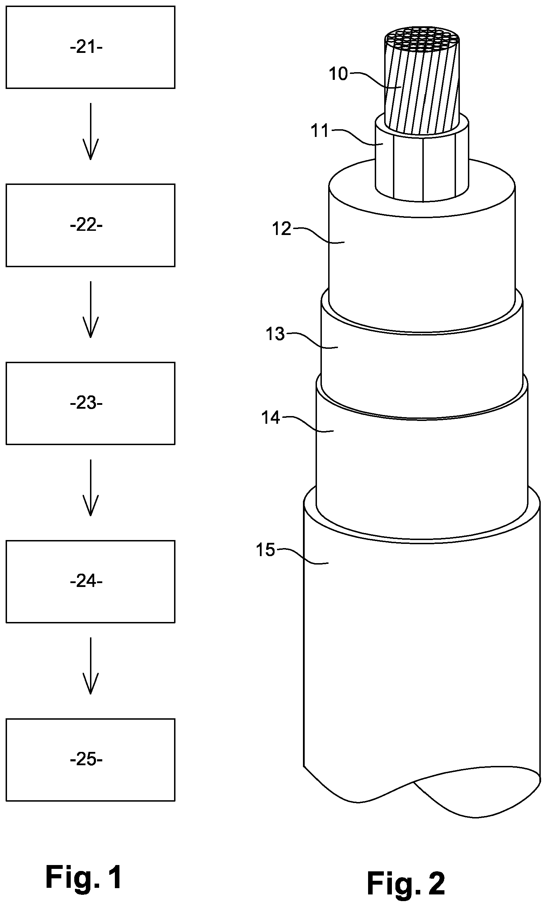

A method for production of an insulated electric high voltage DC cable according to an embodiment of the present invention will now be described with reference to FIGS. 1 and 2. The latter Figure shows the insulated electric high voltage DC cable in a section view. The DC cable comprises from the center and outwards: a stranded multi-wire conductor 10, a first extruded semi-conducting shield 11 disposed around and outside the conductor 10, an extruded polyethylene based conductor insulation 12 with an extruded, cross-linked composition as further described below, a second extruded semi-conducting shield 13 disposed outside the conductor insulation 12, and an outer covering or sheath 15 arranged outside the polymer based insulation system.

The DC cable can when found appropriate be further complemented in various ways with various functional layers or other features. It can for example be complemented with a reinforcement in form of metallic wires outside the outer extruded shield 13, a sealing compound or a water swelling powder introduced in metal/polymer interfaces or a system achieved by e.g. a corrosion resistant metal polyethylene laminate and longitudinal water sealing achieved by water swelling material, e.g. tape or powder beneath the sheath 15. The conductor need not be stranded but can be of any desired shape and constitution, such as a stranded multi-wire conductor, a solid conductor or a segmental conductor.

According to the method for production of the insulated electric high voltage DC cable, a polymer based insulation system is, in a step 21, extruded around the conductor 10, wherein the polymer based insulation system comprises the semi-conducting shield 11, the polyethylene based conductor insulation 12, and the second semi-conducting shield 13. In an alternative embodiment the polyethylene based conductor insulation 12 is exchanged for other polymer based conductor insulation.

Below is a short description of one exemplary method of performing the extrusion. A person skilled in the art realizes that there are other extrusion techniques that can be used with the present invention.

In the exemplary method the conductor is fed from a conductor pay-off through the extruder equipment and other processing and conditioning devices and is finally taken up on a cable core take-up. The conductor pay-off and cable core take-up may be reels or drums suitable for discrete lengths but can be of any suitable type including devices for essentially continuous handling of the supplied conductor and produced cable. The conductor is passed over a first wheel through a conductor preheater wherein it is preheated for a suitable temperature before the insulation system is applied by extrusion. The process is suitable for true triple extrusion where a triple head extruder is used. The inner and outer semi-conductive layers are applied using two separate extruders and a further third extruder is used for the main insulation.

After the extrusion operation the extruded polyethylene based conductor insulation 12 is advantageously, in a step 22, cross-linked. To this end the insulated DC cable is passed through a pressurized curing and cooling chamber, wherein the conditions is controlled to ensure the desired cross-linking degree and other structural characteristics that can be effected by this controlled conditioning and cooling of the extruded insulation system. Typically, the extruded polyethylene based conductor insulation 12 includes a number of additives, among them dicumylperoxide and additives. Thereafter the cable is hauled through a haul-off caterpillar and over a second wheel before being taken up for further processing.

The above approach offers the possibility of an essentially continuous or semi-continuous process for the application and processing of the extruded insulation system.

As a result of the process, however, methane may be created in the cross-linked polyethylene based conductor insulation 12. Any methane may be removed by exposing, in a step 23, the extruded DC cable to a heat treatment while the outer surface of the extruded polymer based insulation system is kept free from any covering to thereby allow the methane to leave.

Next, in a step 24, the outer surface of the extruded polymer based insulation system is covered by a cover 14 permeable to all the substances present in the extruded insulation system in a non-homogenous distribution, for instance a cover of polytetrafluoroethylene.

The substances include preferably one or more rest or byproducts from the cross-linking and/or one or more additives. The rest products include typically peroxide decomposition products, such as acetophenone and cumyl alcohol, and the additives include typically one or more antioxidants and scorch retarders. However, other additives may be of equal or even higher importance.

Next, after having covered the extruded DC cable with the permeable cover, the extruded DC cable is, in a step 25, exposed for a heat treatment procedure in order to equalize the concentration of the substances in the extruded insulation system, in particular adjacent to the outer surface of the extruded insulation system. In particular, since the first heat treatment for removal of methane typically causes the concentration profile to shift from a parabolic shape to a monotonously decreasing concentration profile as seen from an inner surface of the extruded insulation system, the second heat treatment with the permeable cover causes the concentration of the one or more substances to increase adjacent to the outer surface of the extruded insulation system.

This heat treatment procedure may be performed depending on the particular applications and on the particular cross linking additives used. However, temperature and treatment times which typically are used for the common additives used today are indicated below.

The heat treatment procedure is preferably performed at a temperature of between 50 and 120°C, and more preferably between 85 and 105°C.

Finally, the permeable cover 14 is removed and the outer covering or sheath 15 is provided.

## Claims

1. A method of providing an insulated electric DC cable or DC termination or joint, the method comprising :
- providing a polymer based insulation system (11,12,13) comprising a compounded polymer composition (12), **characterized by** the step of:
- exposing the polymer based insulation system (11,12,13) to a heat treatment procedure while the outer surface of the polymer based insulation system (11,12,13) is covered by a cover (14) permeable to all the substances present in the polymer based insulation system (11,12,13) in a non-homogenous distribution, the permeable cover (14) having a melting and/or softening temperature greater than or equal to 120°C, thereby equalizing the concentration of the substances in the polymer based insulation system (11,12,13).

2. The method according to claim 1, **characterized in that** the permeability of the permeable cover (14) to the substances is lower than the permeability of the polymer based insulation system (11,12,13) to the substances.

3. The method according to claim 1 or 2, **characterized in that** the permeable cover (14) comprises a polymeric material that is chosen from polyolefins, polyacetates, polystyrenes, polyacrylates, halogenated polymers, polycarbonates, polyesters, polyamides, polyoximetylen, polysulfons, and polyaryleterketons.

4. The method according to any of claims 1 to 3, **characterized in that** the compounded polymer composition (12) is a cross-linked polymer composition.

5. The method according to any of claims 1 to 4, **characterized in that** the compounded polymer composition (12) is a cross-linked polyethylene.

6. The method according to any of claims 1 to 5, **characterized in that** the substances present in the polymer based insulation system (11,12,13) in a non-homogenous distribution include at least one rest or byproduct from the cross-linking.

7. The method according to claim 6, **characterized in that** the substances present in the polymer based insulation system (11,12,13) in a non-homogenous distribution include at least one peroxide decomposition product.

8. The method according to any of claims 1 to 7, **characterized in that** the polymer based insulation system (11,12,13) comprises a first semi-conducting shield (11), the compounded polymer composition (12), and a second semi-conducting shield (13).

9. The method according to any of claims 1 to 8, **characterized in that** the permeable cover (14) is removed after the heat treatment procedure.

10. The method according to any of claims 1 to 9, **characterized in that** the method is a method for production of insulated electric DC cable and that :
- the cable is exposed to a heat treatment while the outer surface of the polymer based insulation system (11,12,13) is not covered by the permeable cover (14) to remove a second substance present in the polymer based insulation system (11,12,13) after cross-linking; and
- said exposure of the polymer based insulation system (11,12,13) to the heat treatment procedure while the outer surface of the extruded polymer based insulation system (11,12,13) is covered by the cover (14) is performed after removal of said second substance to thereby equalize the concentration of the substances in the polymer based insulation system (11,12,13).

11. The method according to claim 10, **characterized in that** said second substance is methane.

12. The method according to claim 10 or 11, **characterized in that** said exposure of the polymer based insulation system (11,12,13) to the heat treatment procedure while the outer surface of the extruded polymer based insulation system (11,12,13) is covered by the cover (14) is performed after removal of said second substance to thereby increase the concentration of the substances adjacent to the outer surface of the polymer based insulation system (11,12,13).

13. The method according to any of claims 1 to 12, **characterized in that** the heat treatment procedure is performed at a temperature of between 50 and 120 °C.

## Patentansprüche

1. Verfahren zur Bereitstellung eines isolierten elektrischen GS-Kabels oder eines isolierten elektrischen GS-Abschlusses oder einer isolierten elektrischen GS-Verbindung, wobei das Verfahren umfasst:
- Bereitstellen eines polymerbasierten Isoliersystems (11, 12, 13), das eine compoundierte Polymerzusammensetzung (12) umfasst, **gekennzeichnet durch** den folgenden Schritt:
- Unterziehen des polymerbasierten Isoliersystems (11, 12, 13) einer Wärmebehandlungsprozedur, während die Außenfläche des polymerbasierten Isoliersystems (11, 12, 13) durch eine Abdeckung (14) abgedeckt wird, die für alle vorhandenen Substanzen durchlässig ist, die im polymerbasierten Isoliersystem (11, 12, 13) in einer nichthomogenen Verteilung vorhanden sind, wobei die durchlässige Abdeckung (14) eine Schmelz- und/oder Erweichungstemperatur über oder gleich 120 °C aufweist, um dadurch die Konzentration der Substanzen im polymerbasierten Isoliersystem (11, 12, 13) auszugleichen.

2. Verfahren nach Anspruch 1, **dadurch gekennzeichnet, dass** die Durchlässigkeit der durchlässigen Abdeckung (14) für die Substanzen geringer als die Durchlässigkeit des polymerbasierten Isoliersystems (11, 12, 13) für die Substanzen ist.

3. Verfahren nach Anspruch 1 oder 2, **dadurch gekennzeichnet, dass** die durchlässige Abdeckung (14) ein polymeres Material umfasst, das aus Polyolefinen, Polyacetaten, Polystyrolen, Polyacrylaten, halogenierten Polymeren, Polycarbonaten, Polyestern, Polyamiden, Polyoxymethylen, Polysulfonen und Polyaryleterketonen ausgewählt wird.

4. Verfahren nach einem der Ansprüche 1 bis 3, **dadurch gekennzeichnet, dass** die compoundierte Polymerzusammensetzung (12) eine vernetzte Polymerzusammensetzung ist.

5. Verfahren nach einem der Ansprüche 1 bis 4, **dadurch gekennzeichnet, dass** die compoundierte Polymerzusammensetzung (12) ein vernetztes Polyethylen ist.

6. Verfahren nach einem der Ansprüche 1 bis 5, **dadurch gekennzeichnet, dass** die Substanzen, die im polymerbasierten Isoliersystem (11, 12, 13) in einer nichthomogenen Verteilung vorhanden sind, mindestens einen Rest oder ein Nebenprodukt aus der Vernetzung umfassen.

7. Verfahren nach einem Anspruch 6, **dadurch gekennzeichnet, dass** die Substanzen, die im polymerbasierten Isoliersystem (11, 12, 13) in einer nichthomogenen Verteilung vorhanden sind, mindestens ein Peroxidzerfallsprodukt umfassen.

8. Verfahren nach einem der Ansprüche 1 bis 7, **dadurch gekennzeichnet, dass** das polymerbasierte Isoliersystem (11, 12, 13) einen ersten hableitenden Schirm (11), die compoundierte Polymerzusammensetzung (12) und einen zweiten halbleitenden Schirm (13) umfasst.

9. Verfahren nach einem der Ansprüche 1 bis 8, **dadurch gekennzeichnet, dass** die durchlässige Abdeckung (14) nach der Wärmebehandlungsprozedur entfernt wird.

10. Verfahren nach einem der Ansprüche 1 bis 9, **dadurch gekennzeichnet, dass** das Verfahren ein Verfahren zur Herstellung eines isolierten elektrischen GS-Kabels ist und dass:
- das Kabel einer Wärmebehandlungsprozedur unterzogen wird, während die Außenfläche des polymerbasierten Isoliersystems (11, 12, 13) nicht durch die durchlässige Abdeckung (14) abgedeckt wird, um eine zweite Substanz, die im polymerbasierten Isoliersystem (11, 12, 13) vorhanden ist, nach der Vernetzung zu entfernen; und
- das Unterziehen des polymerbasierten Isoliersystems (11, 12, 13) der Wärmebehandlungsprozedur, während die Außenfläche des extrudierten polymerbasierten Isoliersystems (11, 12, 13) durch die Abdeckung (14) abgedeckt wird, nach der Entfernung der zweiten Substanz durchgeführt wird, um dadurch die Konzentration der Substanzen im polymerbasierten Isoliersystem (11, 12, 13) auszugleichen.

11. Verfahren nach Anspruch 10, **dadurch gekennzeichnet, dass** die zweite Substanz Methan ist.

12. Verfahren nach Anspruch 10 oder 11, **dadurch gekennzeichnet, dass** das Unterziehen des polymerbasierten Isoliersystems (11, 12, 13) der Wärmebehandlungsprozedur, während die Außenfläche des extrudierten polymerbasierten Isoliersystems (11, 12, 13) durch die Abdeckung (14) abgedeckt wird, nach der Entfernung der zweiten Substanz durchgeführt wird, um dadurch die Konzentration der Substanzen benachbart zur Außenfläche des polymerbasierten Isoliersystems (11, 12, 13) zu erhöhen.

13. Verfahren nach einem der Ansprüche 1 bis 12, **dadurch gekennzeichnet, dass** die Wärmebehandlungsprozedur bei einer Temperatur von 50 bis 120 °C durchgeführt wird.

## Revendications

1. Procédé pour fournir un câble, une terminaison ou une jonction de courant continu électrique isolé, le procédé comprenant :
- fournir un système d'isolation à base de polymère (11, 12, 13) comprenant une composition de polymère composé (12), **caractérisé par** l'étape qui consiste à :
- exposer le système d'isolation à base de polymère (11, 12, 13) à une procédure de traitement thermique pendant que la surface extérieure du système d'isolation à base de polymère (11, 12, 13) est couverte par une enveloppe (14) perméable à toutes les substances présentes dans le système d'isolation à base de polymère (11, 12, 13) selon une répartition non homogène, l'enveloppe perméable (14) ayant une température de fusion et/ou de ramollissement supérieure ou égale à 120°C, afin d'égaliser la concentration en substances dans le système d'isolation à base de polymère (11, 12, 13).

2. Procédé selon la revendication 1, **caractérisé en ce que** la perméabilité de l'enveloppe perméable (14) aux substances est inférieure à la perméabilité du système d'isolation à base de polymère (11, 12, 13) aux substances.

3. Procédé selon la revendication 1 ou 2, **caractérisé en ce que** l'enveloppe perméable (14) comprend un matériau polymérique qui est choisi à partir de polyoléfines, de polyacétates, de polystyrènes, de polyacrylates, de polymères halogénés, de polycarbonates, de polyesters, de polyamides, de polyoximéthylène, de polysulfones, et de polyaryléthercétones.

4. Procédé selon l'une quelconque des revendications 1 à 3, **caractérisé en ce que** la composition de polymère composé (12) est une composition de polymère réticulé.

5. Procédé selon l'une quelconque des revendications 1 à 4, **caractérisé en ce que** la composition de polymère composé (12) est un polyéthylène réticulé.

6. Procédé selon l'une quelconque des revendications 1 à 5, **caractérisé en ce que** les substances présentes dans le système d'isolation à base de polymère (11, 12, 13) selon une répartition non homogène comprennent au moins un reste ou un sous-produit de la réticulation.

7. Procédé selon la revendication 6, **caractérisé en ce que** les substances présentes dans le système d'isolation à base de polymère (11, 12, 13) selon une répartition non homogène comprennent au moins un produit de décomposition de peroxyde.

8. Procédé selon l'une quelconque des revendications 1 à 7, **caractérisé en ce que** le système d'isolation à base de polymère (11, 12, 13) comprend un premier blindage semi-conducteur (11), la composition de polymère composé (12), et un second blindage semi-conducteur (13).

9. Procédé selon l'une quelconque des revendications 1 à 8, **caractérisé en ce que** l'enveloppe perméable (14) est retiré après la procédure de traitement thermique.

10. Procédé selon l'une quelconque des revendications 1 à 9, **caractérisé en ce que** le procédé est un procédé de fabrication d'un câble de courant continu électrique isolé, et **en ce que** :
- le câble est exposé à un traitement thermique pendant que la surface extérieure du système d'isolation à base de polymère (11, 12, 13) n'est pas couverte par l'enveloppe perméable (14) afin d'éliminer une seconde substance présente dans le système d'isolation à base de polymère (11, 12, 13) après la réticulation ; et
- ladite exposition du système d'isolation à base de polymère (11, 12, 13) à la procédure de traitement thermique pendant que la surface extérieure du système d'isolation à base de polymère extrudé (11, 12, 13) est couverte par l'enveloppe (14) est effectuée après l'élimination de ladite seconde substance afin d'égaliser la concentration en substances dans le système d'isolation à base de polymère (11, 12, 13).

11. Procédé selon la revendication 10, **caractérisé en ce que** ladite seconde substance est du méthane.

12. Procédé selon la revendication 10 ou 11, **caractérisé en ce que** ladite exposition du système d'isolation à base de polymère (11, 12, 13) à la procédure de traitement thermique pendant que la surface extérieure du système d'isolation à base de polymère extrudé (11, 12, 13) est couverte par l'enveloppe (14) est effectuée après l'élimination de ladite seconde substance afin d'augmenter la concentration en substances adjacentes à la surface extérieure du système d'isolation à base de polymère (11, 12, 13).

13. Procédé selon l'une quelconque des revendications 1 à 12, **caractérisé en ce que** la procédure de traitement thermique est effectuée à une température comprise entre 50 et 120°C.
